# EUROPÄISCHE PATENTSCHRIFT

(11) **EP 2 691 202 B1**
(45) Veröffentlichungstag und Bekanntmachung des Hinweises auf die Patenterteilung: **20.12.2017**
(21) Anmeldenummer: 12713046.6
(22) Anmeldetag: 27.03.2012
(51) Int. Cl.: B23B 27/10, B23Q 11/10

(54) **Halter zur spanenden Bearbeitung eines Werkstücks sowie ein Werkstück mit einem solchen Halter mit seitlichen Kühlmittelaustritten.**
Toolholder for the machining of a workpiece and a tool wit such a toolholder with lateral coolant outlets
Support destiné à l'usinage d'une pièce par enlèvement de copeaux ainsi qu'un outil avec un tel support, avec sortie latéral da'agent de refoidissement

(30) Priorität: 28.03.2011 DE 102011016148
(43) Veröffentlichungstag der Anmeldung: 05.02.2014
(73) Patentinhaber: Hartmetall-Werkzeugfabrik Paul Horn GmbH, 72072 Tübingen (DE); Ernst Graf GmbH, 78661 Dietingen (DE)
(72) Erfinder: LUIK, Matthias, 72766 Reutlingen (DE); FUCHS, Edgar, 78661 Boehringen (DE)
(74) Vertreter: Witte, Weller & Partner Patentanwälte mbB
(86) Internationale Anmeldenummer: PCT/EP2012/055437
(87) Internationale Veröffentlichungsnummer: WO 2012/130857

(56) Entgegenhaltungen:
- EP-A2- 1 762 320
- JP-A- 2009 125 848
- US-A1- 2010 178 116
- US-A1- 2010 272 529

## Beschreibung

Die vorliegende Erfindung betrifft einen Halter für ein Werkzeug zur spanenden Bearbeitung eines Werkstücks. Ferner betrifft die Erfindung ein Werkzeug mit einem solchen Halter. Die vorliegende Erfindung betrifft insbesondere die Kühlmittelführung in einem solchen Werkzeug bzw. einem solchen Halter.

Für die Kühlmittelführung in einem Zerspanungswerkzeug gibt es eine Vielzahl von Lösungen. Vielfach ist in dem Halter eine zentrale Kühlmittelbohrung in Längsrichtung vorgesehen, durch die das Kühlmittel von der halterseiten Stirnseite zur werkstückseitigen Stirnseite, insbesondere zu einem dort in einer Schneideinsatzaufnahme sitzenden Schneideinsatz, transportiert wird. Im Bereich der werkstückseitigen Stirnseite tritt das Kühlmittel dann entweder direkt aus dem Halter durch einen Kühlmittelaustritt aus oder wird durch eine oder mehrere Bohrungen im Schneideinsatz weiter zu der mindestens einen Schneide des Schneideinsatzes verteilt. Dabei wird im Allgemeinen das Kühlmittel durch einen gerichteten Strahl direkt auf die mindestens eine Schneide und/oder die Bearbeitungsstelle am dem Werkstück gezielt gespritzt. Eine solche Lösung ist beispielsweise in der DE 103 31 077 B3 beschrieben, bei der die Mündung des Kühlschmiermittelkanals an der werkstückseitigen Stirnseite des Halters oberhalb des Drehmeißel angeordnet ist, so dass der Kühlschmiermittelstrahl ein Werkstück trifft und so stark ist, dass er einen Drehspan bricht. Weitere Werkzeuge dieser Art mit internen Kühlmittelkanälen sind aus der JP 2009 125848 A, der US 2010/178116 A1, der US 2010/272529 A1 und aus der EP 1 762 320 A2 bekannt. JP 2009 125848 A zeigt die Merkmale des Oberbegriffs des Anspruchs 1.

Der vorliegenden Erfindung liegt die Aufgabe zugrunde, einen Halter für ein Werkzeug zur spanenden Bearbeitung eines Werkstück und ein Werkzeug mit einem solchem Halter mit alternativer, insbesondere verbesserter Kühlungsmöglichkeit zu schaffen.

Diese Aufgabe wird erfindungsgemäß gelöst durch einen Halter für ein Werkzeug zur spanenden Bearbeitung eines Werkstücks, wobei der Halter zur Halterung eines Schneideinsatzes mit mindestens einer Schneide ausgebildet ist, mit einem im Bereich der werkstückseitigen Stirnseite des Halters angeordneten Schneideinsatzaufnahme zur Aufnahme des Schneideinsatzes, wobei in dem Halter eine Kühlmittelbohrung angeordnet ist, die in mehrere Kühlmittelaustritte mündet, die an der werkstückseitigen Stirnseite des Halters seitlich neben der Schneideinsatzaufnahme angeordnet und so ausgerichtet sind, dass Kühlmittel in Richtung des Schneideinsatzes austritt. Der Halter ist dadurch gekennzeichnet, dass die Kühlmittelaustritte in einer Kühlmittelaustrittsebene liegen, die parallel und versetzt zu einer durch die Schneideinsatzaufnahme verlaufenden Schneideinsatzebene verläuft, wobei die Kühlmittelaustrittsebene und die Schneideinsatzebene parallel zur Längsrichtung des Halters verlaufen.

Ferner wird diese Aufgabe gelöst durch ein Werkzeug zur spanenden Bearbeitung eines Werkstücks mit einem Halter der oben genannten Art und mit einem Schneideinsatz mit mindestens einer Schneide.

Anders als bei bekannten Werkzeugen wird erfindungsgemäß kein starker gerichteter Kühlmittelstrahl erzeugt, der insbesondere den Span beeinflussen oder gar brechen soll, sondern die Kühlung soll insbesondere durch Überschwemmung der mindestens einen Schneide und/oder der Bearbeitungsstelle am Werkstück erzielt werden. Das Kühlmittel tritt also bei dem erfindungsgemäßen Werkzeug in Richtung des Schneideinsatzes aus, muss aber nicht zwingend einen bestimmten Druck aufweisen. Bei dem erfindungsgemäßen Werkzeug soll vielmehr ein erhöhter Durchfluss an Kühlmittel durch die Kühlmittelaustritte erreicht werden. Bei den bekannten Werkzeugen ist die Durchflussmenge an Kühlmittel jedoch im Allgemeinen begrenzt, da die Querschnittsfläche des zumeist nur einen Kühlmittelaustritts je Schneide in ihrer Größe begrenzt ist. Dies ist bei der erfindungsgemäßen Lösung nicht mehr der Fall, da die Kühlmittelaustritte an der werkstückseitigen Stirnseite des Halters seitlich neben der Schneideinsatzaufnahme angeordnet ist und nicht, wie beispielsweise in der oben genannten DE 103 31 077 B3 vorgeschlagen, direkt oberhalb der Schneideinsatzaufnahme oder in dem Schneideinsatz selbst. Durch diese seitliche Anordnung der Kühlmittelaustritte kann deren Querschnittsfläche vergrößert ausgestaltet werden, um die Durchflussmenge je Zeiteinheit zu erhöhen und so die gewünschte Überschwemmung der Bearbeitungsstelle zu erreichen.

Zur Vergrößerung der Querschnittsfläche der Kühlmittelaustritte sind unterschiedliche Ausgestaltungen möglich. In einer Ausgestaltung sind die Kühlmittelaustritte nicht, wie bei den meisten bekannten Werkzeugen, als kreisförmige Bohrungsöffnungen ausgestaltet, sondern schlitzförmig. In einer anderen Ausgestaltung sind die Kühlmittelaustritte kreisförmig oder oval ausgestaltet, weisen aber ggf. eine größere Querschnittsfläche auf als bekannte Kühlmittelaustrittöffnungen. Die Kühlmittelbohrung mündet in mehrere Kühlmittelaustritte, die so angeordnet sind, dass das Kühlmittel in Richtung des Schneideinsatzes austritt. Beispielsweise können mehrere Kühlmittelaustritte übereinander seitlich neben der Schneideinsatzaufnahme auf einer oder, sofern konstruktiv möglich, auf beiden Seiten neben der Schneideinsatzaufnahme angeordnet sein. Die genaue Anzahl, Ausgestaltung und Anordnung der Kühlmittelaustritte hängt dabei unter anderem von der Größe des Schneideinsatzes, der Größe und/oder Anzahl an aktiven Schneiden, der bei der Bearbeitung entstehenden Wärmemenge und dem gewünschten Überschwemmungsgrad der Bearbeitungsstelle ab; diese Parameter hinsichtlich der Kühlmittelaustritte sind somit auf den konkreten Anwendungsfall angepasst.

Bevorzugt ist in einer weiteren Ausgestaltung vorgesehen, dass der Schneideinsatz plattenförmig ausgestaltet ist.

Die Kühlmittelaustrittebene und die Schneideinsatzebene verlaufen in Bezug auf die Längsrichtung des Halters, der bevorzugt stabförmig ausgestaltet ist, parallel dazu, und der Schneideinsatz, insbesondere die mindestens eine Schneide des Schneideinsatzes, steht in Längsrichtung über die werkstückseitige Stirnseite des Halters vor.

In einer weiteren Ausgestaltung ist vorgesehen, dass der Halter einen Schaftbereich zur Aufnahme in einer Halteeinheit, insbesondere einer Werkzeugmaschine, und eine an der werkstückseitigen Stirnseite des Schaftbereichs in Längsrichtung des Schaftbereichs vorstehend angeordnete Klemmrippe als Schneideinsatzaufnahme aufweist, die gegenüber dem Schaftbereich schmaler ausgestaltet und zwei Klemmbacken aufweist, zwischen denen der Schneideinsatz klemmend aufgenommen ist, wobei der mindestens eine Kühlmittelaustritt an der werkstückseitigen Stirnseite des Schaftbereichs seitlich neben der Klemmrippe angeordnet ist.

Bei bekannten Werkzeugen mit einer solchen Klemmrippe gibt es Ausgestaltungen, bei denen ein Kühlmittelaustritt in einer Klemmbacke, insbesondere der oberen Klemmbacke am werkstückseitigen Endbereich, angeordnet ist. Dazu ist eine Bohrung durch diese Klemmbacke erforderlich, die recht aufwändig herzustellen ist. Aufgrund der geringen Breite der Klemmrippe ist auch bei diesen Lösungen der Durchfluss an Kühlmittel stark begrenzt. Die erfindungsgemäß vorgeschlagene Ausgestaltung umgeht nicht nur diese Begrenzung, sondern ist auch deutlich einfacher in der Herstellung, da grundsätzlich keine Bohrungen in der Klemmrippe erforderlich sind. Es ist aber nicht ausgeschlossen, dass zusätzlich ein weiterer Kühlmittelaustritt in mindestens einer Klemmbacke, beispielsweise in der oberen Klemmbacke, etwa im werkstückseitigen Endbereich der oberen Klemmbacke, vorgesehen ist, wie dies bei bekannten Lösungen der Fall ist.

Bevorzugt ist die Klemmrippe an einem Randbereich der werkstückseitigen Stirnseite des Schaftbereichs angeordnet, so dass eine Seitenfläche des Schaftbereichs in eine Seitenfläche der Klemmrippe stufenlos übergeht. Dadurch wird eine bestimmte Breite des gesamten Werkzeugs nicht überschritten, was insbesondere bei mehreren nebeneinander in einer Werkzeugmaschine anzuordnenden Werkzeugen aufgrund der beengten Verhältnisse erforderlich ist. Bei dieser Ausgestaltung sind grundsätzlich die Kühlmittelaustritte dann nur auf einer Seite seitlich neben der Schneideinsatzaufnahme angeordnet. Alternativ ist in einer Ausgestaltung der Schaftbereich im Bereich der werkstückseitigen Stirnseite verbreitert, so dass Kühlmittelaustritte beidseitig seitlich neben der Schneideinsatzaufnahme angeordnet sein können, indem dieser verbreiterte Bereich der Stirnseite genutzt wird. Dadurch wird eine besonders gute Überschwemmung der Bearbeitungsstelle mit Kühlmittel erreicht.

Wie bereits erwähnt, können zusätzlich zu den seitlichen Kühlmittelaustritten auch ein oder mehrere weitere Kühlmittelaustritte, beispielsweise unterhalb und/oder oberhalb der Schneideinsatzaufnahme, angeordnet sein. Dabei ist auch denkbar, dass dieser mindestens eine weitere Kühlmittelaustritt so ausgestaltet ist, dass ein starker gerichteter Kühlmittelstrahl austritt, der eine Spanbeeinflussung bewirkt, wie dies bei bekannten Werkzeugen der Fall ist.

Bevorzugt ist die Kühlmittelbohrung in Längsrichtung im Halter angeordnet, insbesondere wenn der Halter stabförmig ausgestaltet ist. Die werkstückabgewandte Mündung der Kühlmittelbohrung liegt häufig an der werkstückabgewandten Stirnseite des Halters, kann aber auch an einer Seitenfläche des Halters liegen. Zur Verbindung der Kühlmittelbohrung und des mindestens einen Kühlmittelaustritts sind vorteilhafterweise im Bereich der werkstückseitigen Stirnseite des Halters eine quer zur Längsrichtung des Halter verlaufende, die Kühlmittelbohrung schneidende Querbohrung und mindestens eine weitere, versetzt zur Kühlmittelbohrung in Längsrichtung oder schräg zur Längsrichtung verlaufende Verbindungsbohrung angeordnet. Für die genaue Anzahl und Anordnung dieser weiteren Bohrungen sind grundsätzlich verschiedene Lösungen denkbar, je nach konkreter Ausgestaltung des Werkzeugs insgesamt. Konstruktiv einfach herzustellende Bohrungen sind dabei bevorzugt, die innerhalb des Halters miteinander verbunden sind und nach außen hin durch entsprechende Verschlusselemente, beispielsweise einfache Schrauben, abgedichtet sind.

Es sei an dieser Stelle erwähnt, dass der Begriff "Kühlmittel" hier nicht zwingend nur als Mittel ausschließlich zur Kühlung verstanden werden soll, sondern dass je nach Anwendungsfall das Kühlmittel auch und/oder ausschließlich zur Schmierung geeignet sein soll. Wenn also vorliegend der Begriff "Kühlmittel" verwendet wird, soll dies auch als "Kühlschmiermittel" und "Schmiermittel" mit verstanden werden. Entsprechend sollen die beschriebenen Mittel zur Führung des Kühlmittels auch zur Führung eines "Kühlschmiermittels" oder "Schmiermittels" geeignet sein.

Die Erfindung wird nachfolgend anhand der Zeichnungen näher erläutert. Es zeigen:
- Fig. 1: verschiedene Ansichten einer ersten Ausführungsform eines erfindungsgemäßen Werkzeugs,
- Fig. 2: verschiedene Ansichten einer zweiten Ausführungsform eines erfindungsgemäßen Werkzeugs,
- Fig. 3: verschiedene Ansichten einer dritten Ausführungsform eines erfindungsgemäßen Werkzeugs,
- Fig. 4: verschiedene Ansichten einer vierten Ausführungsform eines erfindungsgemäßen Werkzeugs,
- Fig. 5: verschiedene Ansichten einer fünften Ausführungsform eines erfindungsgemäßen Werkzeugs, und
- Fig. 6: verschiedene Ansichten einer sechsten Ausführungsform eines erfindungsgemäßen Werkzeugs.

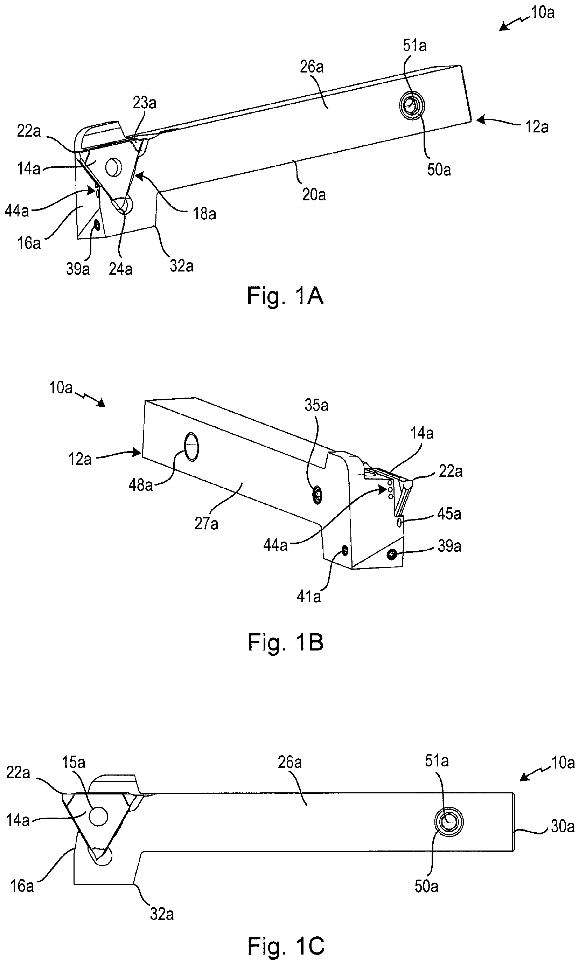

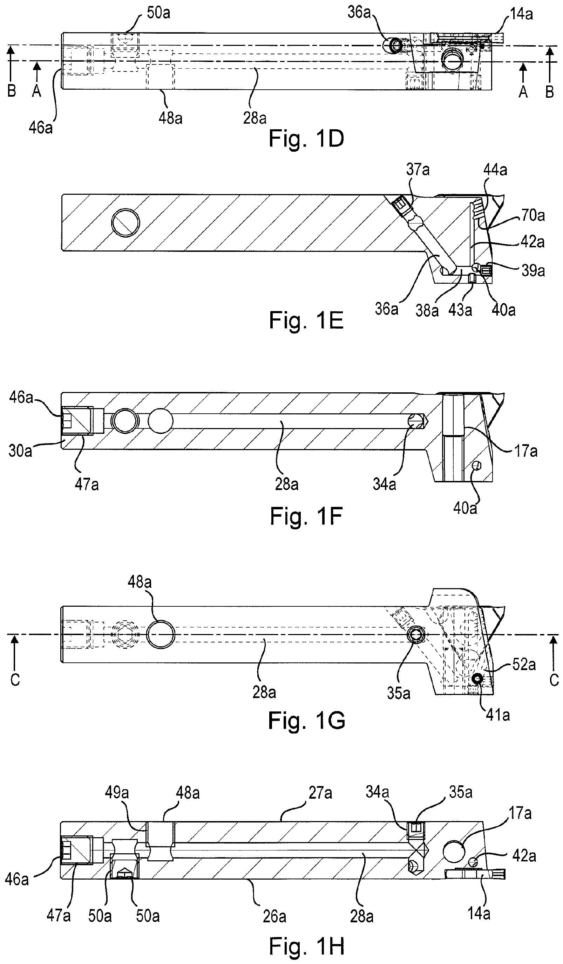

Fig. 1 zeigt verschiedene Ansichten einer ersten Ausführungsform eines erfindungsgemäßen Werkzeugs 10a, nämlich eine perspektivische Seitenansicht (Fig. 1A), eine perspektivische Vorderansicht (Fig. 1B), eine erste Seitenansicht (Fig. 1C), eine Draufsicht (Fig. 1D), eine Schnittdarstellung entlang B-B (Fig. 1E), eine Schnittdarstellung entlang A-A (Fig. 1F), eine zweite Seitenansicht (Fig. 1G) und eine Schnittdarstellung entlang C-C (Fig. 1H). Das Werkzeug 10a weist grundsätzlich einen Halter 12a und einen Schneideinsatz 14a auf, der im Bereich der werkstückseitigen Stirnseite 16a des Halters 12a in einer Schneideinsatzaufnahme 18a angeordnet ist. Der Halter 12a ist stabförmig ausgestaltet mit einem Schaftbereich 20a, der vorliegend einen rechteckigen Querschnitt aufweist und zur Aufnahme in einer (nicht gezeigten) Halteeinheit, beispielsweise einer Werkzeugmaschine, vorgesehen ist. Der Schneideinsatz 14a ist bei diesem Ausführungsbeispiel als Wendeschneidplatte mit drei Schneiden 22a, 23a, 24a ausgestaltet, wobei die aktive Schneide 22a über die Stirnseite 16a des Halters 12a vorsteht.

Der Schneideinsatz 14a ist an dem Halter 12a mittels eines (nicht gezeigten) Befestigungselements befestigt, bspw. mittels einer in den Halter in die Gewindebohrung 15a eingeschraubten Klemmschraube und/oder mittels einer von oben gegen den Schneideinsatz drückenden Klemmpratze, die mittels einer in die Gewindebohrung 17a eingeschraubten Halteschraube an den Halter 12a angeschraubt ist. Die Schneideinsatzaufnahme 18a ist seitlich an dem Halter 12a so angebracht, dass der Schneideinsatz 14a mit der Seitenfläche 26a eine ebene Fläche bildet.

Zur Versorgung der Bearbeitungsstelle und der aktiven Schneide 22a während eines Zerspanungsvorgangs mit Kühlmittel (zur Kühlung und/oder Schmierung) ist in dem Schaftbereich 20a des Halters 12a eine zentrale, sich in Längsrichtung erstreckende Kühlmittelbohrung 28a angeordnet, die an der werkstückabgewandten Stirnseite 30a des Halters 12a nach außen mündet. Im Kopfbereich 32a des Halters 12a ist eine erste Verbindungsbohrung (Querbohrung) 34a vorgesehen, die die Kühlmittelbohrung 28a mit einer schräg verlaufenden zweiten Verbindungsbohrung 36a verbindet. Diese Verbindungsbohrung 36a ist wiederum mit einer im Kopfbereich 32a in Längsrichtung vorgesehenen dritten Verbindungsbohrung 38a verbunden. Die dritte Verbindungsbohrung 38a ist wiederum mit einer vierten Verbindungsbohrung (Querbohrung) 40a verbunden, die quer zur Längsrichtung durch den Kopfbereich 32a verläuft und in eine fünfte Verbindungsbohrung 42a mündet. Diese fünfte Verbindungsbohrung 42a mündet schließlich über mehrere sechste Verbindungsbohrungen 70a in mehrere Kühlmittelaustritte 44a.

Diese Kühlmittelaustritte 44a umfassen bei dem gezeigten Ausführungsbeispiel drei kreisförmig ausgestaltete Austrittsöffnungen, die seitlich neben der Schneideinsatzaufnahme 18a und somit neben dem Schneideinsatz 14a in einer gemeinsamen, parallel zur Längsrichtung des Halters 12a und parallel zur Schneideinsatzebene verlaufenden Kühlmittelaustrittsebene liegen (die Schneideinsatzebene kann dabei als eine Ebene durch den Schneideinsatz, beispielsweise die Blattebene in Fig. 1C, angesehen werden; die Kühlmittelaustrittsebene kann dabei als eine Ebene durch die Kühlmittelaustrittsöffnungen 44a, also beispielsweise die Blattebene in Fig. 1E, angesehen werden).

Dabei sind die Kühlmittelaustrittsöffnungen 44a so angeordnet, dass das Kühlmittel beim Zerspanungsvorgang in Richtung des Schneideinsatzes 14a, insbesondere in Richtung der aktiven Schneide 22a bzw. der Bearbeitungsstelle, austritt. Anders als bei bekannten Werkzeugen wird das Kühlmittel dabei aber nicht zwingend mit sehr großem Druck herausgespritzt, etwa um auch eine Spanbeeinflussung zu erzielen, sondern die Kühlung bzw. Schmierung erfolgt durch Überschwemmung der Bearbeitungsstelle und der aktiven Schneide 22a mit einer größeren Menge Kühlmittel, was bei dem gezeigten Ausführungsbeispiel durch die größere Anzahl an Kühlmittelaustrittsöffnungen 44a ermöglicht wird. Diese größere Anzahl ist erfindungsgemäß deshalb möglich, da die Kühlmittelaustrittsöffnungen 44a seitlich neben der Schneideinsatzaufnahme 18a angeordnet sind und nicht, wie bei bekannten Werkzeugen, im Schneideinsatz selbst oder unterhalb bzw. oberhalb der Schneideinsatzaufnahme, also in der Schneideinsatzebene selbst, wo im Allgemeinen nur eine oder zwei kleine Austrittsöffnungen angeordnet werden können.

Es sei an dieser Stelle erwähnt, dass die gezeigte Ausgestaltung der unterschiedlichen Bohrungen zur Kühlmittelführung beispielhaft zu verstehen ist. Die Führung der Bohrungen kann gänzlich anders gestaltet sein. Auch die Anzahl, Anordnung und Ausgestaltung der Kühlmittelaustrittsöffnungen kann anders gestaltet sein. Weitere Ausführungsbeispiele dazu werden in nachfolgend näher erläuterten weiteren Ausführungsbeispielen explizit vorgestellt.

Bei dem gezeigten Ausführungsbeispiel ist die Lage der verschiedenen Bohrungen so gewählt, dass diese möglichst einfach herstellbar sind. Nach außen sind die unterschiedlichen Bohrungen ferner mit einem Verschlusselement 35a, 37a, 39a, 41a, 43a abgedichtet. Als Verschlusselement kann bspw. eine einfache Schraube dienen, die in das jeweilige, nach außen mündende Ende der zugehörigen Bohrung eingeschraubt und ggf. verklebt wird, wobei natürlich auch andere Ausführungsbeispiele, etwa Verschlussstopfen oder Bolzen, und andere Befestigungsmöglichkeiten der Verschlusselemente, etwa durch Einlöten, Verschweißen oder Einschrumpfen, denkbar sind.

Für die Versorgung mit Kühlmittel stehen bei dem gezeigten Ausführungsbeispiel mehrere Möglichkeiten zur Verfügung. Die Kühlmittelbohrung 28a ist zum einen bis zur werkstückabgewandten Stirnseite 30a geführt, wo sie eine erste Zuführungsöffnung 46a aufweist. Die Kühlmittelbohrung 28a weist ferner im werkstückabgewandten Endbereich des Halters 12a zwei seitliche Zuführungsöffnungen 48a, 50a an den gegenüberliegenden Seitenflächen 26a, 27a auf, um je nach den gegebenen Verhältnissen das Kühlmittel auch von einer der gegenüberliegenden Seiten 26a, 27a zuführen zu können. Die verschiedenen Zuführungsöffnungen 46a, 48a, 50a sind jeweils ebenfalls durch entsprechende Verschlusselemente 47a, 49a, 51a bei Nichtbenutzung verschlossen.

Zusätzlich zu den Kühlmittelaustrittsöffnungen 44a kann zusätzlich, wie in den Figuren 1B und 1G erkennbar ist, eine weitere Kühlmittelaustrittsöffnung 45a unmittelbar unterhalb der Schneideinsatzaufnahme 18a vorgesehen sein, die über eine weitere Verbindungsbohrung 52a mit Kühlmittel versorgt wird.

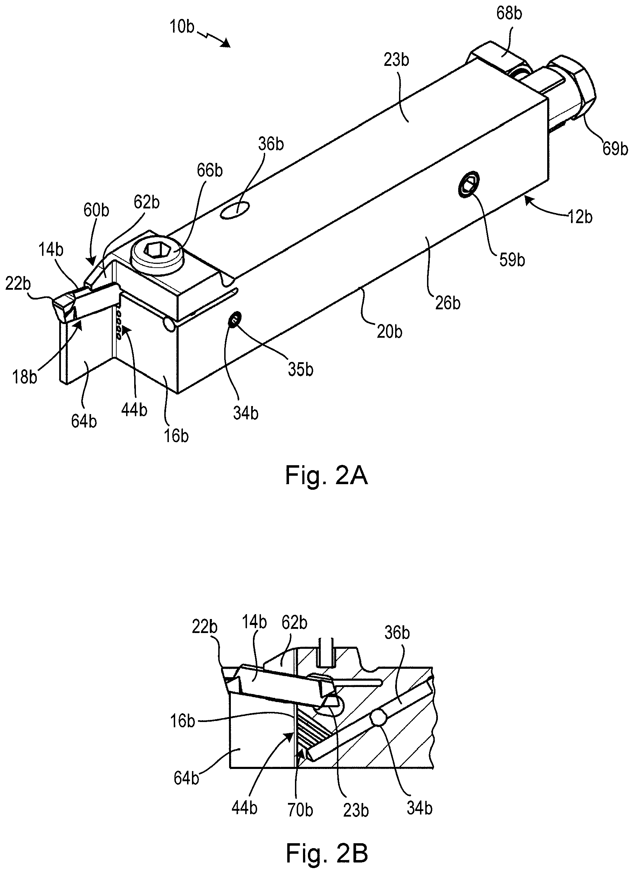

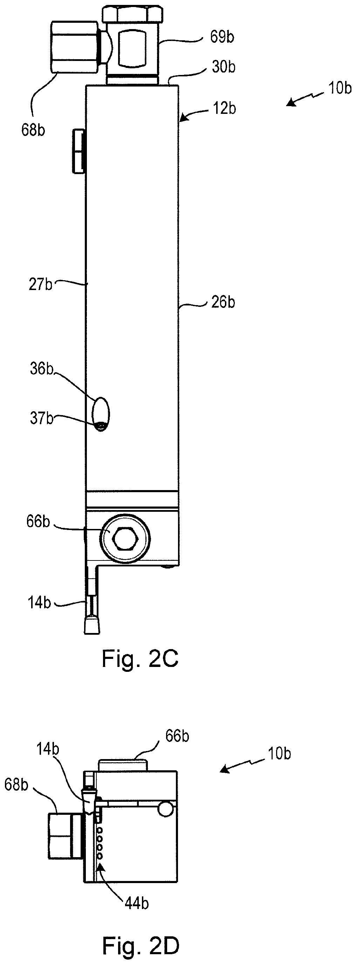

Fig. 2 zeigt verschiedene Ansichten einer zweiten Ausführungsform eines erfindungsgemäßen Werkzeugs 10b, nämlich eine perspektivische Ansicht (Fig. 2A), eine Querschnittsdarstellung des Kopfbereichs (Fig. 2B), eine Draufsicht (Fig. 2C) und eine Vorderansicht (Fig. 2D). Für grundsätzlich gleiche Teile sind dieselben Zahlen in den Bezugszeichen verwendet, wobei der Buchstabe "b" auf die zweite Ausführungsform und eventuell abgewandelte Teile hinweisen.

Der Halter 12b ist ebenfalls stabförmig mit einem Schaftbereich 20b ausgestaltet, weist aber an seiner werkstückseitigen Stirnseite 16b eine in Längsrichtung des Halters 12b vorstehend angeordnete Klemmrippe 60b auf, die im Wesentlichen durch zwei Klemmbacken 62b, 64b gebildet ist, zwischen denen der Schneideinsatz 14b klemmend gehalten wird. Der Schneideinsatz 14b weist bei diesem Ausführungsbeispiel zwei Schneiden 22b, 23b auf und ist stabförmig in bekannter Weise ausgebildet. Mittels einer Klemmschraube 66b wird zur Klemmung des Schneideinsatzes 14b die obere Klemmbacke 62b in Richtung der unteren Klemmbacke 64b gedrückt. Derartige Ausgestaltungen von Klemmhaltern sind im Allgemeinen bekannt (beispielsweise aus der DE 101 32 721 C1) und sollen deshalb an dieser Stelle nicht weiter erläutert werden.

Zur Kühlmittelführung ist bei dieser Ausführungsform im vorderen Bereich des Halters 12b eine erste, schräg verlaufende Verbindungsbohrung 36b vorgesehen, die mit einer (nicht gezeigten) in Längsrichtung des Halters verlaufenden Kühlmittelbohrung verbunden ist. Diese Kühlmittelbohrung mündet an der werkstückabgewandten Stirnseite 30b nach außen und wird dort mit Kühlmittel gespeist, beispielsweise über entsprechende Speisungselemente 68b, 70b. Darüber hinaus kann die Kühlmittelbohrung auch über eine seitliche Zuführung 50b an der Seitenfläche 26b gespeist werden.

Zur Verbindung der ersten Verbindungsbohrung 36b und der Kühlmittelbohrung ist ferner eine zweite Verbindungsbohrung (Querbohrung) 34b vorgesehen, ähnlich wie bei dem ersten Ausführungsbeispiel. Die erste Verbindungsbohrung 36b geht in Richtung der werkstückseitigen Stirnseite 16b in Austrittsbohrungen 70b über, die schließlich an der werkstückseitigen Stirnseite 16b in mehrere (vorliegend vier) Austrittsöffnungen 44b münden.

Auch bei diesem Ausführungsbeispiel sind die Kühlmittelaustrittsöffnungen 44b seitlich neben der Schneideinsatzaufnahme 18b, die durch die Klemmrippe 60b mit den beiden Klemmbacken 62b, 64b gebildet ist, angeordnet und so ausgerichtet, dass das Kühlmittel in Richtung des Schneideinsatzes 14b, insbesondere in Richtung der aktiven Schneide 22b, austritt. Ferner sind auch bei diesem Ausführungsbeispiel die unterschiedlichen Bohrungen 34b, 36b durch entsprechende Verschlussmittel 35b, 37b nach außen abgedichtet.

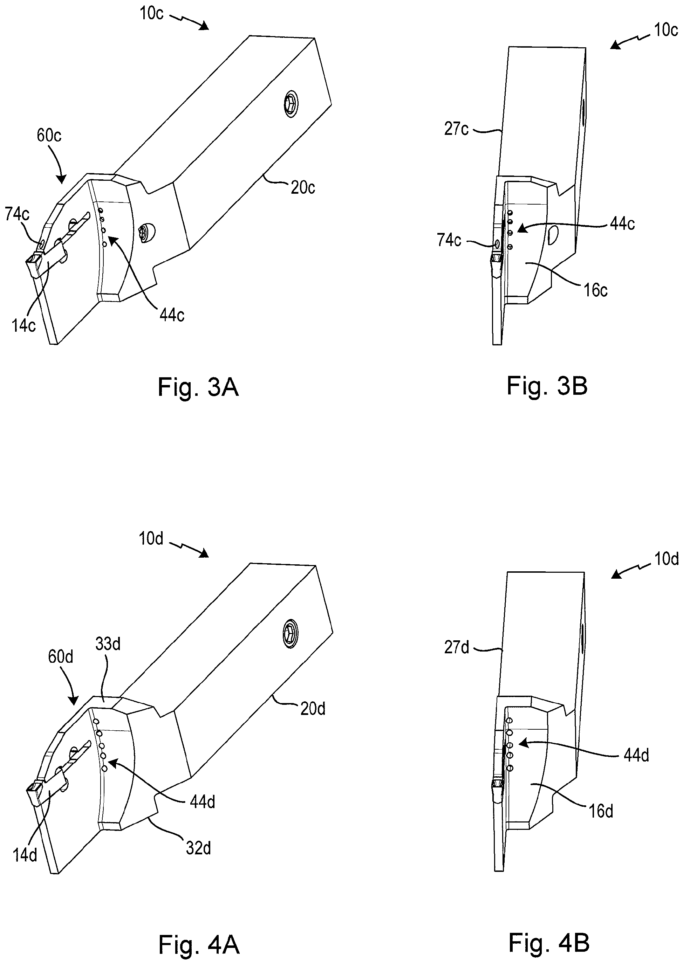

Weitere Ausführungsformen eines erfindungsgemäßen Werkzeugs 10c, 10d, 10e, 10f sind in den Figuren 3 bis 6 gezeigt, wobei jeweils eine perspektivische Seitenansicht (Fig. 3A, 4A, 5A, 6A) und eine perspektivische Vorderansicht (Fig. 3B, 4B, 5B, 6B) gezeigt sind. Bei diesen Ausführungsformen weist das Werkzeug jeweils eine Klemmrippe 60c, 60d, 60e, 60f auf, die in ähnlicher Weise wie die Klemmrippe 60b bei der in Fig. 2 gezeigten Ausführungsform des Werkzeugs 10b den (jeweils identischen) Schneideinsatz 14c klemmend hält.

Bei den in den Figuren 3 und 4 gezeigten Ausführungsformen des Werkzeugs 10c, 10d ist die Klemmrippe 60c, 60d jeweils seitlich an der werkstückseitigen Stirnseite 16c, 16d, die bei diesen Ausführungsformen gewölbt ausgestaltet ist, angeordnet und schließt bündig mit der jeweiligen Seitenfläche 27c, 27d des jeweiligen Schaftbereiches 20c, 20d ab. Seitlich neben der Klemmrippe 60c, 60d sind dabei an der werkstückseitigen Stirnseite 16c, 16d jeweils mehrere Kühlmittelaustrittsöffnungen 44c, 44d angeordnet, wobei bei der in Fig. 4 gezeigten Ausführungsform des Werkzeugs 10d die Anzahl der Austrittsöffnungen größer ist und die oberste Austrittsöffnung näher an der oberen Deckfläche 33d des Kopfbereichs 32d als bei der in Fig. 3 gezeigten Ausführungsform des Werkzeugs 10c. Bevorzugt in Abhängigkeit der Schneidenbreite kommt die eine oder die andere Variante des Schneidwerkzeugs zum Einsatz. Die Querschnitte der gesamten Anzahl der Austrittsöffnungen entsprechen bevorzugt in Summe etwa dem Querschnitt der Kühlmittelbohrung durch den Schaftbereich.

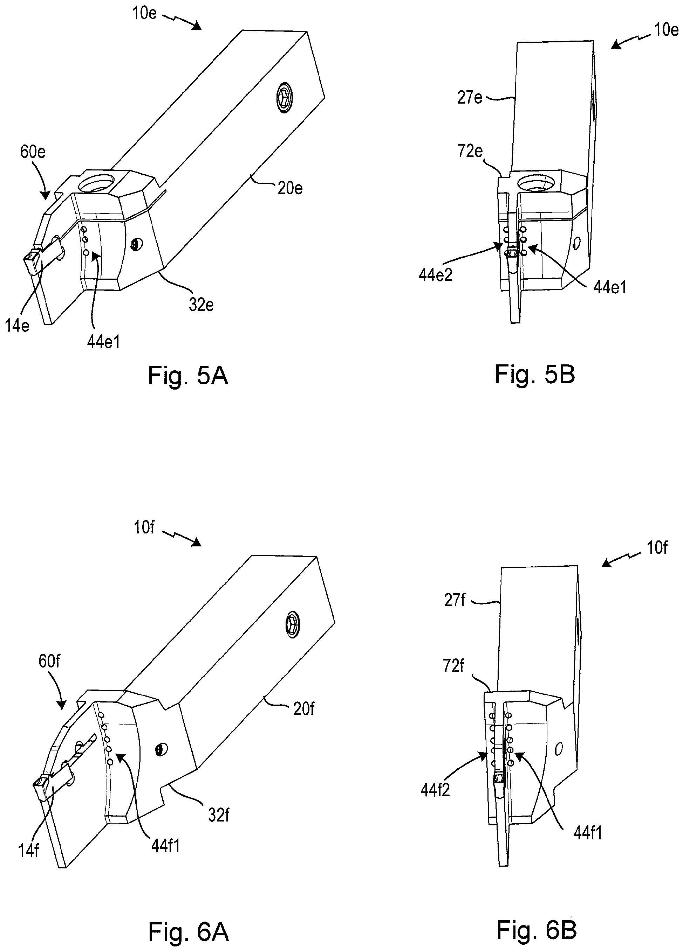

Bei den in den Figuren 5 und 6 gezeigten Ausführungsformen des Werkzeugs 10e, 10f ist der Kopfbereich 32e, 32f jeweils verbreitert ausgestaltet, so dass die Klemmrippe 60e, 60f nicht bündig mit der jeweiligen Seitenfläche 27e, 27f des jeweiligen Schaftbereiches 20e, 20f abschließt, sondern dazwischen eine Stufe 72e, 72f des verbreiterten Kopfbereichs 32e, 32f vorsteht. Bei diesen Ausführungsformen des Werkzeugs 10e, 10f sind jeweils zwei Gruppen von Kühlmittelaustrittsöffnungen 44e1, 44e2 bzw. 44f1, 44f2 seitlich neben der Klemmrippe 60e, 60f angeordnet, nämlich jeweils eine Gruppe auf einer Seite. Der verbreiterte Vorsprung 72e, 72f im Kopfbereich wird also bei diesen Ausführungsformen dazu genutzt, eine zweite Gruppe an Austrittsöffnungen 44e2, 44f2 dort anzubringen, so dass von beiden Seiten aus Kühlmittel in Richtung der aktiven Schneide des Schneideinsatzes 14e, 14f bzw. in Richtung der Bearbeitungsstelle austreten kann, um dort eine noch bessere Überschwemmung und damit Kühlung und/oder Schmierung zu erreichen. Dabei muss natürlich die Anzahl, Anordnung und Ausgestaltung der einzelnen Kühlmittelaustrittsöffnungen der beiden Gruppen nicht identisch sein, ebenso wie es auch grundsätzlich gilt, dass die Austrittsöffnungen auch unterschiedlich ausgestaltet sein können und auch nicht, wie in den gezeigten Ausführungsbeispielen, sämtlich in einer Ebene liegen müssen.

Bei der in Fig. 3 gezeigten Ausführungsform des Werkzeugs 10c ist noch darauf hinzuweisen, dass bei dieser Ausführungsform auch durch die obere Klemmbacke 62c ein weiterer Kühlmittelkanal zu einer weiteren Kühlmittelaustrittsöffnung 74c geführt ist, die im vorderen Endbereich der oberen Klemmbacke liegt und durch die ebenfalls Kühlmittel in Richtung der aktiven Schneide austritt. Dabei kann diese Austrittsöffnung 74c so ausgestaltet sein, dass dort das Kühlmittel mit einem erhöhten Druck austritt und ggf. eine Spanbeeinflussung bewirkt. Ergänzend oder alternativ kann auch durch die untere Klemmbacke jeweils eine Kühlmittelbohrung mit einer Austrittsöffnung im vorderen Endbereich angeordnet sein.

Ferner können die erfindungsgemäß seitlich neben der Schneideinsatzaufnahme vorgesehenen Austrittsöffnungen auch bei Werkzeugen vorgesehen sein, bei denen der (plattenförmige) Schneideinsatz nicht in Längsrichtung des Schaftbereichs sondern quer dazu angeordnet ist, beispielsweise um 90° verdreht zur Längsrichtung. Die Führung des Kühlmittels durch den Halter ist dann entsprechend ausgestaltet, um das Kühlmittel zu den Austrittsöffnungen zu transportieren. Bei weiteren Ausgestaltungen ist vorgesehen, dass das Kühlmittel seitlich auf den Schneideinsatz trifft.

Es versteht sich, dass die gezeigten Ausführungsformen lediglich beispielhaft zu verstehen sind. Die einzelnen Merkmale der gezeigten Ausführungsformen können auch in beliebigen anderen Kombinationen in weiteren Ausführungsformen des erfindungsgemäßen Werkzeugs realisiert sein. Dies gilt insbesondere in Bezug auf die Anzahl, Anordnung und Ausgestaltung der Kühlmittelaustrittsöffnungen sowie der unterschiedlichen Bohrungen innerhalb des Werkzeugs von einer oder mehreren Zuführungsöffnungen bis hin zu den Kühlmittelaustrittsöffnungen. Ferner kann die erfindungsgemäße Ausgestaltung und Anordnung der Kühlmittelaustrittsöffnungen auch bei anderen Werkzeugtypen eingesetzt werden.

## Patentansprüche

1. Halter (12a) für ein Werkzeug (10a) zur spanenden Bearbeitung eines Werkstücks, wobei der Halter (12a) zur Halterung eines Schneideinsatzes (14a) mit mindestens einer Schneide (22a, 23a, 24a) ausgebildet ist, mit einem im Bereich der werkstückseitigen Stirnseite (16a) des Halters angeordneten Schneideinsatzaufnahme (18a) zur Aufnahme des Schneideinsatzes (14a), wobei in dem Halter (12a) eine Kühlmittelbohrung (28a) angeordnet ist, die in mehrere Kühlmittelaustritte (44a, 44b, 44c, 44d, 44e1, 44f1) mündet, die an der werkstückseitigen Stirnseite (16a) des Halters (12a) seitlich neben der Schneideinsatzaufnahme (18a) angeordnet und so ausgerichtet sind, dass Kühlmittel in Richtung des Schneideinsatzes (14a) austritt,
**dadurch gekennzeichnet, dass** die Kühlmittelaustritte (44a, 44b, 44c, 44d, 44e1, 44f1) in einer Kühlmittelaustrittsebene liegen, die parallel und versetzt zu einer durch die Schneideinsatzaufnahme (18a) verlaufenden Schneideinsatzebene verläuft, wobei die Kühlmittelaustrittsebene und die Schneideinsatzebene parallel zur Längsrichtung des Halters (12a) verlaufen.

2. Werkzeug (10a) zur spanenden Bearbeitung eines Werkstücks mit:
- einem Schneideinsatz (14a) mit mindestens einer Schneide (22a, 23a, 24a) und
- dem Halter (12a) gemäß Anspruch 1.

3. Werkzeug nach Anspruch 2, **dadurch gekennzeichnet, dass** der Schneideinsatz (14a) plattenförmig ausgestaltet ist.

4. Werkzeug nach Anspruch 2 oder 3, **dadurch gekennzeichnet, dass** der Halter (12b) einen Schaftbereich (20b) zur Aufnahme in einer Halteeinheit, insbesondere einer Werkzeugmaschine, und eine an der werkstückseitigen Stirnseite (16b) des Schaftbereichs (20b) in Längsrichtung des Schaftbereichs vorstehend angeordnete Klemmrippe (60b) als Schneideinsatzaufnahme aufweist, die gegenüber dem Schaftbereich (20b) schmaler ausgestaltet ist und zwei Klemmbacken (62b, 64b) aufweist, zwischen denen der Schneideinsatz (14b) klemmend aufgenommen ist, wobei die Kühlmittelaustritte (44b) an der werkstückseitigen Stirnseite (16b) des Schaftbereichs (20b) seitlich neben der Klemmrippe (60b) angeordnet ist.

5. Werkzeug nach Anspruch 4, **dadurch gekennzeichnet, dass** die Klemmrippe (60b) an einem Randbereich der werkstückseitigen Stirnseite (16b) des Schaftbereichs (20b) angeordnet ist, so dass eine Seitenfläche (27b) des Schaftbereichs in eine Seitenfläche der Klemmrippe stufenlos übergeht.

6. Werkzeug nach Anspruch 2, **dadurch gekennzeichnet, dass** die Kühlmittelaustritte (44a) nur auf einer Seite seitlich neben der Schneideinsatzaufnahme (18a) angeordnet sind.

7. Werkzeug nach Anspruch 2, **dadurch gekennzeichnet, dass** die Kühlmittelaustritte (44e1, 44e2) beidseitig seitlich neben der Schneideinsatzaufnahme (60e) angeordnet sind.

8. Werkzeug nach Anspruch 4 und 7, **dadurch gekennzeichnet, dass** der Schaftbereich (20e, 20f) im Bereich der werkstückseitigen Stirnseite (16e, 16f) verbreitert ist und dass ein Teil der Kühlmittelaustritte (44e2, 44f2) in diesem verbreiterten Bereich (72e, 72f) der Stirnseite (16e, 16f) angeordnet ist.

9. Werkzeug nach einem der Ansprüche 2 bis 8, **dadurch gekennzeichnet, dass** mindestens ein weiterer Kühlmittelaustritt (45a, 74c) oberhalb und/oder unterhalb der Schneideinsatzaufnahme (18a, 60c) angeordnet ist.

10. Werkzeug nach Anspruch 4, **dadurch gekennzeichnet, dass** mindestens ein weiterer Kühlmittelaustritt (74c) in mindestens einer Klemmbacke (62c) angeordnet ist.

11. Werkzeug nach Anspruch 10, **dadurch gekennzeichnet, dass** der mindestens eine weitere Kühlmittelaustritt (74c) in der oberen Klemmbacke (62c), insbesondere im werkstückseitigen Endbereich der oberen Klemmbacke, angeordnet ist.

12. Werkzeug nach einem der Ansprüche 2 bis 11, **dadurch gekennzeichnet, dass** die Kühlmittelbohrung (28a) sich in Längsrichtung im Halter (12a) erstreckt.

13. Werkzeug nach einem der Ansprüche 2 bis 12, **dadurch gekennzeichnet, dass** zur Verbindung der Kühlmittelbohrung (28a) und der Kühlmittelaustritte (44a) im Bereich der werkstückseitigen Stirnseite (16a) des Halters (12a) eine quer zur Längsrichtung des Halters verlaufende, die Kühlmittelbohrung schneidende Querbohrung (34a, 40a) und mindestens eine weitere versetzt zur Kühlmittelbohrung in Längsrichtung oder schräg zur Längsrichtung verlaufende Verbindungsbohrung (36a, 38a, 42a, 70a) angeordnet sind.

## Claims

1. A holder (12a) for a tool (10a) for the machining of a workpiece, wherein the holder (12a) is configured for holding a cutting insert (14a) having at least one cutting edge (22a, 23a, 24a), comprising a cutting insert receptacle (18a), disposed in the region of the workpiece-side end face (16a) of the holder, for the reception of the cutting insert (14a), wherein in the holder (12a) is arranged a coolant bore (28a), which opens out into a plurality of coolant outlets (44a, 44b, 44c, 44d, 44e1, 44f1) which are disposed on the workpiece-side end face (16a) of the holder (12a), alongside the cutting insert receptacle (18a), and are oriented such that coolant is discharged in the direction of the cutting insert (14a),
**characterized in that** the coolant outlets (44a, 44b, 44c, 44d, 44e1, 44f1) lie in a coolant outlet plane which runs parallel to and offset from a cutting insert plane running through the cutting insert receptacle (18a), wherein said coolant outlet plane and said cutting insert plane run parallel to the longitudinal direction of the holder (12a).

2. A tool (10a) for the machining of a workpiece, comprising:
- a cutting insert (14a) having at least one cutting edge (22a, 23a, 24a), and
- the holder (12a) according to claim 1.

3. The tool according to claim 2, **characterized in that** the cutting insert (14a) is of plate-like configuration.

4. The tool according to claim 2 or 3, **characterized in that** the holder (12b) has a shank region (20b) for reception in a holding unit, in particular a machine tool, and a clamping rib (60b), as a cutting insert receptacle, disposed on the workpiece-side end face (16b) of the shank region (20b) so as to protrude in the longitudinal direction of the shank region, which clamping rib is configured narrower than the shank region (20b) and has two clamping jaws (62b, 64b), between which the cutting insert (14b) is clampingly accommodated, wherein the coolant outlets (44b) are disposed on the workpiece-side end face (16b) of the shank region (20b), alongside the clamping rib (60b).

5. The tool according to claim 4, **characterized in that** the clamping rib (60b) is disposed on a marginal region of the workpiece-side end face (16b) of the shank region (20b), so that a side face (27b) of the shank region merges smoothly into a side face of the clamping rib.

6. The tool according to claim 2, **characterized in that** the coolant outlets (44a) are disposed only on one side alongside the cutting insert receptacle (18a).

7. The tool according to claim 2, **characterized in that** the coolant outlets (44e1, 44e2) are disposed on both sides alongside the cutting insert receptacle (60e).

8. The tool according to claims 4 and 7, **characterized in that** the shank region (20e, 20f) is widened in the region of the workpiece-side end face (16e, 16f), and **in that** a part of the coolant outlets (44e2, 44f2) is disposed in this widened region (72e, 72f) of the end face (16e, 16f).

9. The tool according to any of claims 2 to 8, **characterized in that** at least one further coolant outlet (45a, 74c) is disposed above and/or below the cutting insert receptacle (18a, 60c).

10. The tool according to claim 4, **characterized in that** at least one further coolant outlet (74c) is disposed in at least one clamping jaw (62c).

11. The tool according to claim 10, **characterized in that** the at least one further coolant outlet (74c) is disposed in the upper clamping jaw (62c), in particular in the workpiece-side end region of the upper clamping jaw.

12. The tool according to any of claims 2 to 11, **characterized in that** the coolant bore (28a) extends in the longitudinal direction in the holder (12a).

13. The tool according to any of claims 2 to 12, **characterized in that**, for the connection of the coolant bore (28a) and the coolant outlets (44a), in the region of the workpiece-side end face (16a) of the holder (12a) are disposed a transverse bore (34a, 40a), which runs transversely to the longitudinal direction of the holder and intersects the coolant bore, and at least one further connecting bore (36a, 38a, 42a, 70a), which runs offset from the coolant bore in the longitudinal direction or obliquely to the longitudinal direction.

## Revendications

1. Support (12a) pour un outil (10a) pour l'usinage par enlèvement de copeaux d'une pièce, le support (12a) étant réalisé pour supporter un insert de coupe (14a) comprenant au moins un tranchant (22a, 23a, 24a) avec un logement d'insert de coupe (18a) disposé dans la région du côté frontal (16a) du support côté pièce, pour recevoir l'insert de coupe (14a), un alésage de réfrigérant (28a) étant disposé dans le support (12a), lequel débouche dans plusieurs sorties de réfrigérant (44a, 44b, 44c, 44d, 44e1, 44f1), qui sont disposées, au niveau du côté frontal (16a) du support (12a) côté pièce, latéralement à côté du logement d'insert de coupe (18a) et qui sont orientées de telle sorte que le réfrigérant sorte dans la direction de l'insert de coupe (14a),
**caractérisé en ce que** les sorties de réfrigérant (44a, 44b, 44c, 44d, 44e1, 44f1) sont situées dans un plan de sortie de réfrigérant qui s'étend parallèlement et de manière décalée par rapport à un plan d'insert de coupe s'étendant à travers le logement d'insert de coupe (18a), le plan de sortie de réfrigérant et le plan d'insert de coupe s'étendant parallèlement à la direction longitudinale du support (12a).

2. Outil (10a) pour l'usinage par enlèvement de copeaux d'une pièce, comprenant :
- un insert de coupe (14a) avec au moins un tranchant (22a, 23a, 24a) et
- le support (12a) selon la revendication 1.

3. Outil selon la revendication 2, **caractérisé en ce que** l'insert de coupe (14a) est configuré en forme de plaque.

4. Outil selon la revendication 2 ou 3, **caractérisé en ce que** le support (12b) présente une région de tige (20b) destinée à être reçue dans une unité de support, en particulier une machine-outil, et une nervure de serrage (60b) en tant que logement d'insert de coupe, disposée au niveau du côté frontal (16b) de la région de tige (20b) côté pièce, faisant saillie dans la direction longitudinale de la région de tige, laquelle est plus étroite que la région de tige (20b) et présente deux mâchoires de serrage (62b, 64b) entre lesquelles l'insert de coupe (14b) est reçu par serrage, les sorties de réfrigérant (44b) étant disposées latéralement à côté de la nervure de serrage (60b) au niveau du côté frontal (16b) de la région de tige (20b) côté pièce.

5. Outil selon la revendication 4, **caractérisé en ce que** la nervure de serrage (60b) est disposée au niveau d'une région de bord du côté frontal (16b) de la région de tige (20b) côté pièce, de telle sorte qu'une surface latérale (27b) de la région de tige se prolonge sans gradin par une surface latérale de la nervure de serrage.

6. Outil selon la revendication 2, **caractérisé en ce que** les sorties de réfrigérant (44a) sont disposées sur un seul côté latéralement à côté du logement d'insert de coupe (18a).

7. Outil selon la revendication 2, **caractérisé en ce que** les sorties de réfrigérant (44e1, 44e2) sont disposées des deux côtés latéralement à côté du logement d'insert de coupe (60e).

8. Outil selon la revendication 4 et 7, **caractérisé en ce que** la région de tige (20e, 20f) est élargie dans la région du côté frontal (16e, 16f) côté pièce, et **en ce qu'**une partie des sorties de réfrigérant (44e2, 44f2) est disposée dans cette région élargie (72e, 72f) du côté frontal (16e, 16f).

9. Outil selon l'une quelconque des revendications 2 à 8, **caractérisé en ce qu'**au moins une sortie de réfrigérant supplémentaire (45a, 74c) est disposée au-dessus et/ou en dessous du logement d'insert de coupe (18a, 60c).

10. Outil selon la revendication 4, **caractérisé en ce qu'**au moins une sortie de réfrigérant supplémentaire (74c) est disposée dans au moins une mâchoire de serrage (62c).

11. Outil selon la revendication 10, **caractérisé en ce que** l'au moins une sortie de réfrigérant supplémentaire (74c) est disposée dans la mâchoire de serrage supérieure (62c), en particulier dans la région d'extrémité côté pièce de la mâchoire de serrage supérieure.

12. Outil selon l'une quelconque des revendications 2 à 11, **caractérisé en ce que** l'alésage de réfrigérant (28a) s'étend dans la direction longitudinale dans le support (12a).

13. Outil selon l'une quelconque des revendications 2 à 12, **caractérisé en ce que** pour la connexion de l'alésage de réfrigérant (28a) et des sorties de réfrigérant (44a) dans la région du côté frontal (16a) du support (12a) côté pièce, sont prévus un alésage transversal (34a, 40a) s'étendant transversalement à la direction longitudinale du support, coupant l'alésage de réfrigérant, et au moins un alésage de connexion (36a, 38a, 42a, 70a) supplémentaire s'étendant de manière décalée par rapport à l'alésage de réfrigérant dans la direction longitudinale ou obliquement par rapport à la direction longitudinale.
